(19) Europäisches Patentamt
European Patent Office
Office européen des brevets

(11) **EP 2 121 847 B2**

(12) **NOUVEAU FASCICULE DE BREVET EUROPEEN**
Après la procédure d'opposition

(45) Date de publication et mention de la décision concernant l'opposition:
**08.06.2022   Bulletin 2022/23**

(45) Mention de la délivrance du brevet:
**04.04.2018   Bulletin 2018/14**

(21) Numéro de dépôt: **08708762.3**

(22) Date de dépôt: **07.02.2008**

(51) Classification Internationale des Brevets (IPC):
**C08L 95/00** *(2006.01)*      **C08L 23/00** *(2006.01)*
**E01C 7/18** *(2006.01)*       **E04B 1/66** *(2006.01)*
**C08L 91/06** *(2006.01)*      **C08L 91/08** *(2006.01)*
**C08L 23/02** *(2006.01)*

(52) Classification Coopérative des Brevets (CPC):
(C-Sets disponibles)
**E01C 7/18; C08L 95/00;** C08L 23/02; C08L 91/08
(Cont.)

(86) Numéro de dépôt international:
**PCT/EP2008/051474**

(87) Numéro de publication internationale:
**WO 2008/101809 (28.08.2008 Gazette 2008/35)**

(54) **COMPOSITION BITUMINEUSE RESISTANTE AU VIEILLISSEMENT**

ALTERUNGSRESISTENTE BITUMENZUSAMMENSETZUNG

AGE RESISTANT BITUMINOUS COMPOSITION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.02.2007   FR 0701076**

(43) Date de publication de la demande:
**25.11.2009   Bulletin 2009/48**

(73) Titulaire: **TOTAL MARKETING SERVICES**
**92800 Puteaux (FR)**

(72) Inventeurs:
• **MARTIN, Didier**
  **F-69440 St Laurent d'Agny (FR)**
• **RIVIER, Céline**
  **F-38550 Sablons (FR)**
• **MENDEZ, Stéphanie**
  **F-69100 Villeurbanne (FR)**

(74) Mandataire: **Plasseraud IP**
  **66, rue de la Chaussée d'Antin**
  **75440 Paris Cedex 09 (FR)**

(56) Documents cités:
**EP-A2- 1 254 925      WO-A-03/095749**
**US-A- 6 027 557**

• **GRAHAM C. HURLEY AND BRIAN D. POWELL: "Evaluation of Sasobit for use in warm mix asphalt"[Online] juin 2005 (2005-06), pages 1-27, XP002451497 Auburn, AL 36830 USA Extrait de l'Internet: URL:http://www.eng.auburn.edu/center/ncat/reports/rep05-06.pdf> [extrait le 2007-09-19]**
• **SASOL WAX GMBH WORTHDAMM 13-27 20457 HAMBURG GERMANY: "What is Sasobit?"[Online] 2007, page 1, XP002451498 Extrait de l'Internet: URL:http://www.sasolwax.com/Europe-highlight-sasobit.html> [extrait le 2007-09-19]**
• **YLVA EDWARDS et al.: "Rheological effects of commercial waxes and polyphosphoric acid in bitumen 160/220-low temperature performance", Fuel, vol. 85, no. 7-8, 24 October 2005 (2005-10-24), pages 989-997,**

(52) Classification Coopérative des Brevets (CPC):
(Cont.)

C-Sets
**C08L 95/00**

**Description**

**DOMAINE TECHNIQUE**

La présente invention appartient au domaine des bitumes. Plus spécifiquement, elle concerne des compositions bitumineuses résistantes au vieillissement, en particulier résistantes au vieillissement chimique. En particulier, l'invention s'adresse à des compositions bitumineuses résistantes au vieillissement obtenues à partir d'au moins un bitume sensible au vieillissement et de paraffines.

L'invention concerne également l'utilisation de ces compositions dans les domaines des applications routières, notamment dans la fabrication de liants routiers tels que les enrobés à chaud, les enrobés à froid ou les enduits superficiels, et dans les domaines des applications industrielles, par exemple dans la fabrication de revêtements intérieurs et extérieurs.

L'invention concerne aussi l'utilisation de paraffines pour diminuer la sensibilité au vieillissement de bitumes sensibles au vieillissement chimique à l'air.

**POSITION DU PROBLEME**

Il est connu d'utiliser des compositions de bitume modifié, notamment additionné de polymère(s), comme liants pour des revêtements de surfaces diverses et, en particulier, comme revêtements superficiels routiers, à condition que ces compositions présentent en combinaison un certain nombre de caractéristiques mécaniques. Des caractéristiques mécaniques optimisées telles que la résistance à l'orniérage ou à la fissuration sont notamment cruciales pour les applications dans les revêtements routiers.

Au-delà des propriétés mécaniques, il convient de tenir compte pour les bitumes, de leurs propriétés chimiques et en particulier de leur sensibilité au vieillissement chimique. Dans un environnement naturel le bitume vieillit sous l'action de quatre facteurs principaux : l'oxygène, la lumière, la température et l'humidité. Le vieillissement chimique est essentiellement lié aux réactions d'oxydation avec l'oxygène et est accéléré par une augmentation de température. Ces réactions d'oxydation se traduisent dans le bitume, par l'augmentation du nombre de groupes fonctionnels très polaires et très réactifs comme par exemple les fonctions carbonyles ou sulfoxydes. Les produits de condensation ainsi que l'aromaticité augmentent dans le bitume tandis que la teneur en composés saturés diminue. Cela se traduit par un durcissement du bitume et peut notamment conduire à des lézardes, des cassures, des fissures, des craquelures et/ou des coupures notamment dans les revêtements routiers.

La sensibilité des bitumes au vieillissement chimique est en particulier gênante lorsque celui-ci est chauffé à des températures très élevées au voisinage de 160°C en présence de granulats dans les centrales d'enrobage.

La sensibilité au vieillissement des bitumes peut être augmentée lorsque, dans certains processus de raffinage, les bitumes issus de la distillation du pétrole sont soumis à des opérations de viscoréduction. Cette opération de viscoréduction consiste à craquer thermiquement des fractions lourdes à 430°C et à produire des résidus viscoréduits ayant une faible pénétrabilité et une température Bille et Anneau élevée.

Du fait de leur consistance, les résidus viscoréduits, issus de ce procédé pourraient être incorporés dans des formulations pour notamment augmenter la consistance de bitumes qui le sont moins. Cependant ces résidus viscoréduits sont très sensibles au vieillissement car ils sont composés d'espèces très réactives avec l'oxygène et ne peuvent donc pas être utilisés tels quels dans les compositions bitumineuses destinées à la fabrication de revêtements routiers par exemple. Pour pouvoir utiliser ces bases viscoréduites dans les bitumes, il est donc nécessaire d'améliorer leur résistance au vieillissement.

De même, certains résidus de distillation peuvent être soumis à des opérations de soufflage. Le soufflage consiste à transformer les résidus de distillation sous l'action de l'oxygène de l'air par des réactions d'oxydation et de condensation des molécules, à une température comprise entre 250 et 290 °C. Les bitumes soufflés sont plus durs mais sont moins résistants au vieillissement chimique du fait de la présence de produits très polaires et très réactifs.

Enfin certains résidus de distillation issus de certains pétroles bruts à forte teneur en soufre, peuvent être particulièrement sensibles au vieillissement sans avoir été soumis à des opérations de raffinage très sévères, comme la viscoréduction ou le soufflage. De par leur origine et leur teneur en espèces réactives, ils sont naturellement sensibles au vieillissement.

Le problème posé est donc d'améliorer la résistance au vieillissement des bitumes sensibles au vieillissement, notamment chimique, en vue des applications routières et/ou industrielles.

**ART ANTERIEUR**

Pour tenter d'améliorer la résistance au vieillissement de certains bitumes, il a été proposé d'incorporer divers additifs dans les compositions bitumineuses. C'est ainsi que la demande de brevet EP 1 227 140 A2 suggère l'ajout d'additifs, plus particulièrement d'alkyl succinimide et d'un phénol dans les résidus de distillation avant viscoréduction, afin d'obtenir des résidus de viscoréduction moins sensibles au vieillissement.

Dans la demande de brevet EP 17288831, il est ajouté au bitume des composés minéraux comprenant un aluminosilicate et des cations ayant un nombre de coordination et une structure analogue à ceux de l'ammonium pour obtenir des compositions moins sensibles au vieillissement que le bitume de départ.

## OBJECTIFS DE L'INVENTION

Dans ces circonstances, la présente invention vise l'obtention de compositions bitumineuses présentant une résistance améliorée au vieillissement chimique, notamment par oxydation.

Un autre objectif de l'invention est de proposer des compositions bitumineuses comprenant un bitume sensible au vieillissement, dont la résistance au vieillissement est améliorée.

Un autre objectif de l'invention est de proposer un procédé simple de préparation de compositions bitumineuses, dont la résistance au vieillissement est améliorée.

Un autre objectif de l'invention est de proposer l'utilisation d'un additif dans des compositions bitumineuses pour améliorer leur résistance au vieillissement.

## BREVE DESCRIPTION DE L'INVENTION

Tout d'abord, l'invention concerne une composition bitumineuse A comprenant au moins un bitume et au moins une paraffine, la composition étant caractérisée en ce qu'elle comprend au moins un bitume B sensible au vieillissement dont la variation $\Delta TBA_B$ de la température de ramollissement bille et anneau après RTFOT selon la norme NF EN 12607-1 est supérieure ou égale à 6°C, en ce qu'elle est plus résistante au vieillissement que le bitume **B**, en ce que le bitume **B** est choisi parmi les produits issus de la viscoréduction et/ou du soufflage de résidus distillation atmosphérique et/ou de résidus de distillation sous vide, ces produits et résidus pouvant être pris seuls ou en mélanges, et en ce que la teneur en paraffines additionnées varie de 1 à 5 % en masse par rapport à la masse de bitume dans la composition **A**.

Selon l'invention, la variation de la température de ramollissement bille et anneau du bitume sensible au vieillissement **B** $\Delta TBA_B$ après RTFOT selon la norme NF EN 12607-1 est supérieure ou égale à 6°C.

Selon une autre mise en oeuvre de l'invention, la variation de la température de ramollissement bille et anneau de la composition bitumineuse **A** $\Delta TBA_A$ après RTFOT selon la norme NF EN 12607-1, est inférieure à la variation de la température de ramollissement bille et anneau dudit bitume **B** $\Delta TBA_B$ après RTFOT selon la norme NF EN 12607-1. En d'autres termes, la composition bitumineuse est plus résistante au vieillissement que le bitume, ou l'un des bitumes, de départ.

L'invention concerne aussi l'utilisation de paraffines comme additifs pour améliorer la résistance au vieillissement d'une composition bitumineuse **A,** cette composition bitumineuse **A** comprenant notamment au moins un bitume **B** sensible au vieillissement qui présente une variation $\Delta TBA_B$ de la température de ramollissement bille et anneau après RTFOT selon la norme NF EN 12607-1 est supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges, et ladite composition bitumineuse **A** comprenant de 1 à 5% en masse de paraffines additionnées par rapport à la masse de bitume dans la composition **A.**

En outre, l'invention vise un procédé de préparation d'une composition bitumineuse **A** comprenant au moins un bitume **B** sensible au vieillissement en vue d'améliorer la résistance au vieillissement de ladite composition bitumineuse. Ce procédé consiste à mettre en oeuvre au moins un bitume **B** sensible au vieillissement dont la variation $\Delta TBA_B$ de la température de ramollissement bille et anneau après RTFOT selon la norme NF EN 12607-1 est supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges, à lui ajouter de 1 et 5 % en masse de paraffines par rapport à la masse de bitume dans la composition **A**. Tout au long du procédé, on chauffe la composition à une température comprise de préférence entre 140 et 180°C, sous agitation, jusqu'à l'obtention d'une composition bitumineuse finale homogène.

Diverses utilisations des compositions bitumineuses **A** obtenues selon l'invention sont envisagées, notamment pour la préparation d'un liant bitumineux, lequel peut à son tour être employé pour préparer une association avec des granulats routiers. Les associations obtenues (association bitume granulats) sont également un objet de l'invention.

Un autre aspect de l'invention est l'utilisation d'une composition bitumineuse A selon l'invention dans diverses applications industrielles, notamment pour préparer un revêtement d'étanchéité, une membrane ou une couche d'imprégnation.

## DESCRIPTION DETAILLEE DE L'INVENTION

Les compositions bitumineuses **A** selon l'invention comprennent au moins un bitume **B** sensible au vieillissement tel que défini ci-dessus. Ainsi, les compositions bitumineuses **A** selon l'invention peuvent comprendre un ou plusieurs bitumes sensibles au vieillissement. Par bitume **B** sensible au vieillissement, on entend un bitume dont la variation $\Delta TBA_B$ de température de ramollissement bille-anneau après test RTFOT selon la norme NF EN 12607-1 est supérieure ou égale à 6°C. De plus, dans la composition bitumineuse **A**, le ou les bitumes sensibles au vieillissement peuvent être pris seuls ou en mélanges avec d'autres bitumes non sensibles au vieillissement, ou moins sensibles au vieillissement qu'un bitume **B** sensible au vieillissement selon la définition prévue dans la présente demande.

La résistance au vieillissement est évaluée par un test normalisé (NF EN 12607--1) appelé essai d'un film mince roulant au four, ou en anglais, « Rolling Thin Film Oven Test », abrégé test RTFOT. Dans cet essai, un film de liant bitumineux en renouvellement permanent est chauffé dans une étuve à une température prescrite pendant une période donnée et sous un balayage constant d'air. Ce test permet de simuler en laboratoire, sous des conditions contrôlées, le vieillissement des bitumes routiers lors de l'enrobage avec des granulats en centrale à environ 160°C. A la fin de l'essai on mesure la variation de masse, le pourcentage de pénétrabilité restante (ou pénétrabilité résiduelle) c'est-à-dire le ratio entre la pénétrabilité après le test RTFOT et la pénétrabilité avant le test RTFOT, la variation de la température de ramollissement bille et anneau (ΔTBA) avant et après le test RTFOT, voire le rapport des viscosités.

Un bitume soumis au test RTFOT vieillit, ce qui se traduit par une augmentation de sa température de ramollissement bille et anneau. Plus la valeur du ΔTBA est importante, plus le bitume est considéré comme sensible au vieillissement. Ce vieillissement se traduit également par une diminution de la pénétrabilité. Plus le bitume vieillit, plus le pourcentage de pénétrabilité résiduelle diminue. Ceci est également considéré comme un indice de la sensibilité du bitume au vieillissement.

Parmi les bitumes sensibles au vieillissement, on peut citer notamment les produits issus de la viscoréduction et/ou du soufflage de résidus de distillation atmosphérique et/ou de résidus de distillation sous vide, et leurs mélanges. En effet, les résidus viscoréduits sont soumis à un craquage thermique à très haute température (430°C) et les résidus soufflés à des réactions d'oxydation à haute température (250-290°C). Dans les deux cas, les résidus obtenus après ces opérations sont nettement plus sensibles au vieillissement que des résidus n'ayant pas subi l'une ou l'autre de ces transformations. Les résidus de distillation atmosphérique ou les résidus de distillation sous vide ne sont en général pas particulièrement sensibles au vieillissement. Cependant, certains bruts, riches en soufre par exemple, conduisent à des résidus de distillation atmosphérique et des résidus de distillation sous vide sensibles au vieillissement.

On considère donc que les bitumes **B** sensibles au vieillissement contenus dans les compositions bitumineuses **A** selon l'invention sont les produits issus de la viscoréduction et/ou du soufflage de résidus distillation atmosphérique et/ou de résidus de distillation sous vide et leurs mélanges, présentant une variation de température de ramollissement bille et anneau (ΔTBA) supérieure ou égale à 6°C après le test RTFOT.

Les paraffines utilisées dans l'invention sont des paraffines ayant des longueurs de chaînes de 30 à 120 atomes de carbone ($C_{30}$ à $C_{120}$). Les paraffines sont choisies parmi les polyalkylènes. De préférence, on utilisera selon l'invention des paraffines de polyméthylène et des paraffines de polyéthylène. Ces paraffines pourront être d'origine pétrolière ou provenir de l'industrie chimique. Ainsi selon une variante préférée de l'invention, les paraffines utilisées sont des paraffines synthétiques issues de la conversion de la biomasse et/ou du gaz naturel.

Dans une variante de l'invention, ces paraffines contiennent une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Préférentiellement, les paraffines comprennent de 85 à 95% de paraffines normales et de 5 à 15% d'isoparaffines et/ou de paraffines ramifiées. Plus préférentiellement, les paraffines comprennent de 50 à 100% de paraffines normales et de 0 à 50% d'isoparaffines. Préférentiellement, les paraffines comprennent de 85 à 95% de paraffines normales et de 5 à 15% d'isoparaffines.

Selon un mode préféré de l'invention, les paraffines sont des paraffines de polyméthylène. Selon un autre mode préféré de l'invention, les paraffines sont des paraffines synthétiques de polyméthylène et en particulier des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

Les paraffines sont largement utilisées dans le domaine des bitumes en tant que fluxant/fluidifiant à chaud, pour abaisser les températures de mise en oeuvre lors de l'application de la composition bitumineuse sur un support par exemple. Ceci entraîne une réduction des émissions de fumées, des économies d'énergie et permet de protéger les ouvriers lors de l'application du bitume. Cependant, leur efficacité au regard de l'amélioration de la résistance des bitumes au vieillissement n'était pas connue.

Selon l'invention, l'addition de paraffines à au moins un bitume **B** sensible au vieillissement tel que défini ci-dessus, par exemple un bitume ou mélange de bitume **B** sensible au vieillissement, éventuellement avec d'autres bitumes non sensibles au vieillissement, conduit à une composition bitumineuse **A** finale, qui est plus résistante au vieillissement que le bitume **B** de départ. Ainsi l'addition de paraffines à au moins un bitume **B** ayant une variation de température bille et anneau $\Delta TBA_B$ après test RTFOT supérieure ou égale à 6°C, résulte en une composition bitumineuse **A** qui a une variation de température bille et anneau $\Delta TBA_A$ après test RTFOT inférieure à la variation de température bille et anneau $\Delta TBA_B$ du bitume **B** de départ ($\Delta TBA_A < \Delta TBA_B$). L'addition de paraffines permet une diminution de la variation de température bille et anneau.

Ainsi, les paraffines sont additionnées au bitume (ou mélange de bitumes) à des teneurs en masse, par rapport à la masse de bitume dans la composition **A,** qui varient de 1 à 5 %

Selon une variante de l'invention, on considère tous les bitumes y compris le ou les bitumes sensibles au vieillissement et le ou les bitumes non ou moins sensibles au vieillissement, lorsque plusieurs bitumes sont prévus, dans le calcul du rapport massique paraffines/bitumes dans la composition **A.** Cela dit, dans une variante préférée de l'invention, on ne tient compte que du ou des bitumes **B** sensibles au vieillissement, pour le calcul du rapport massique paraffines/bitumes dans la composition **A.**

D'autres additifs peuvent également être ajoutés à la composition bitumineuse **A,** afin d'obtenir différents types de compositions bitumineuses selon l'application envisagée. On peut par exemple utiliser des bitumes fluxés par addition de solvants volatils, de fluxants d'origine pétrolière, de fluxants carbochimiques et/ou de fluxants d'origine végétale.

Il est en outre connu de modifier le liant bitumineux en mélangeant au bitume, seul ou issu d'un mélange de bitumes, au moins un composé pouvant être de type (co)polymère, en vue d'améliorer certaines de ses performances mécaniques et thermiques.

A titre d'exemples de polymères pour bitume, on peut citer les élastomères tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié), polychloroprène, polynorbornène et éventuellement les polyoléfines tels que les polyéthylènes PE (polyéthylène), PEHD (polyéthylène haute densité), le polypropylène PP, les plastomères tels que les EVA (copolymère polyéthylène-acétate de vinyle), EMA (copolymère polyéthylène-acrylate de méthyle), les copolymères d'oléfines et d'esters carboxyliques insaturés EBA (copolymère polyéthylène-acrylate de butyle), les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycidyle les copolymères éthylène-propylène, les caoutchoucs, les polyisobutylènes, les SEBS (copolymère du styrène, de l'éthylène, du butylène et du styrène), les ABS (acrylonitrile-butadiène-styrène).

D'autres additifs peuvent encore être ajoutés à la composition bitumineuse selon l'invention. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de soufre et ses dérivés, utilisés pour réticuler un élastomère à des teneurs de 0,01% à 30% par rapport au poids d'élastomère.

Parmi les agents de réticulation, on peut citer les agents de réticulation cationiques tels que les mono ou poly acides, ou anhydride carboxyliques, les esters d'acides carboxyliques, les acides sulfoniques, sulfurique, phosphoriques, voire les chlorures d'acides, les phénols, à des teneurs de 0,01% à 30% par rapport au polymère. Ces agents sont susceptibles de réagir avec l'élastomère et/ou le plastomère fonctionnalisé. Ils peuvent être utilisés en complément ou en remplacement des agents de vulcanisation.

En outre, l'invention vise un procédé de préparation d'une composition bitumineuse dont la résistance au vieillissement est améliorée, cette composition bitumineuse **A** comprenant au moins un bitume **B** sensible au vieillissement, par exemple un bitume ou mélange de bitume **B** sensible au vieillissement, éventuellement seul ou en mélange avec d'autres bitumes non ou moins sensibles au vieillissement. Ce procédé consiste à mettre en oeuvre au moins un bitume **B** sensible au vieillissement dont la variation $\Delta TBA_B$ de la température de ramollissement bille et anneau après RTFOT selon la norme NF EN 12607-1 est supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges, à lui ajouter de 1 et 5 % en masse de paraffines par rapport à la masse de bitume dans la composition A. Tout au long du procédé, on chauffe le bitume ou mélange de bitumes ainsi que la composition bitumineuse, à une température qui autorise un mélange aisé, par exemple à une température comprise entre 140 et 180°C, jusqu'à l'obtention d'une composition bitumineuse finale homogène. Avantageusement, le bitume ou mélange de bitumes ainsi que la composition bitumineuse, sont placés sous agitation. L'addition de paraffines peut se faire avant ou après l'ajout d'autres additifs utilisés en fonction de l'application visée. Les paraffines sont choisies en qualité, et ajoutées selon les quantités, mentionnées ci-dessus. Il en est de même pour d'autres additifs éventuels.

L'invention concerne aussi l'utilisation de paraffines comme additifs pour améliorer la résistance au vieillissement d'une composition bitumineuse **A** comprenant au moins un bitume **B**, notamment au moins un bitume **B** sensible au vieillissement, et plus particulièrement au moins un bitume **B** dont la variation de température de ramollissement bille et anneau après RTFOT ($\Delta TBA_B$) est supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges, et ladite composition bitumineuse **A** comprenant de 1 à 5% en masse de paraffines additionnées par rapport à la masse de bitume dans la composition **A**.

Pour améliorer la résistance des compositions bitumineuses **A,** on utilise un bitume ou mélange de bitumes **B** choisi parmi les produits issus de la viscoréduction et/ou du soufflage de résidus distillation atmosphérique et/ou de résidus de distillation sous vide pris seuls ou en mélanges.

Pour améliorer la résistance des compositions bitumineuses **A,** on utilise des paraffines choisies parmi les paraffines de longueur de chaîne variant de $C_{30}$ à $C_{120}$ parmi les polyalkylènes, de préférence les polyméthylènes et les polyéthylènes d'origine pétrolière ou de l'industrie chimique, et parmi les paraffines synthétiques issues de la conversion de la biomasse et/ou du gaz naturel, ces paraffines pouvant être prises seules ou en mélange. Les paraffines sont composées de 50 à 100% de paraffines normales et de 0 à 50% d'isoparaffines et/ou de paraffines ramifiées, préférentiellement de 85% à 95% de paraffines normales et de 5 à 15% d'isoparaffines et/ou de paraffines ramifiées.

Préférentiellement, on utilise pour améliorer la résistance des compositions bitumineuses **A,** des paraffines synthétiques de polyméthylène qui peuvent être par exemple issues de la conversion de gaz de synthèse par le procédé Fischer-Tropsch.

Pour améliorer la résistance des compositions bitumineuses **A,** on additionne les paraffines à une teneur de 1 à 5% en masse par rapport la masse de bitume dans la composition **A**.

Selon une variante de l'invention, on considère tous les bitumes y compris le ou les bitumes sensibles au vieillissement et le ou les bitumes non ou moins sensibles au vieillissement, lorsque plusieurs bitumes sont prévus, dans le calcul du rapport massique paraffines/bitumes dans la composition **A**. Cela dit, dans une variante préférée de l'invention, on ne tient compte que du ou des bitumes **B** sensibles au vieillissement, pour le calcul du rapport massique paraffines/bitumes dans la composition **A**.

Diverses utilisations des compositions bitumineuses **A** obtenues selon l'invention sont envisagées, notamment pour la préparation d'un liant bitumineux, lequel peut à son tour être employé pour préparer une association avec des granulats routiers. Le liant bitumineux fabriqué à partir de la composition bitumineuse **A** selon l'invention peut être un liant anhydre, une émulsion bitumineuse, un bitume fluxé ou un bitume polymère. Les associations entre le liant bitumineux comprenant la composition bitumineuse **A** et les granulats routiers sont également un objet de l'invention.

Parmi les applications routières envisagées, on peut notamment citer les enrobés bitumineux comme matériaux pour la construction et l'entretien des corps de chaussée et de leur revêtement, ainsi que pour la réalisation de tous travaux de voiries. Ainsi, l'invention concerne par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

Un autre aspect de l'invention est l'utilisation d'une composition bitumineuse **A** selon l'invention dans diverses applications industrielles, notamment pour préparer des revêtements d'étanchéité, des membranes anti-bruit, des membranes d'isolation, des dalles de moquette, des couches d'imprégnation.

**EXEMPLES**

Pour mémoire, dans toute la présente demande, les propriétés suivantes des bitumes sont mesurées comme indiqué dans le tableau 1 ci-dessous :

Tableau 1

| Propriété | Abréviation | Unité | Norme de mesure |
|---|---|---|---|
| Pénétrabilité à l'aiguille à 25°C | P25 | 1/10mm | NF EN 1426 |
| Température de ramollissement bille et anneau | TBA | °C | NF EN 1427 |
| Test de vieillissement "Rolling Thin Film Oven Test" | RTFOT | - | NF EN 12607-1 |
| Test de vieillissement "PAV" | PAV | - | NF EN 14769 |

L'indice de pénétrabilité PI (ou indice de Pfeiffer) est défini par la formule suivante :

$$PI = \frac{1952 - 500 \times \log(P_{25}) - 20 \times TBA}{50 \times \log(P_{25}) - TBA - 120}$$

L'invention est illustrée par les exemples suivants donnés à titre non limitatif.

Trois types de bitumes ont été utilisés dans ces exemples. Ces trois bitumes ont subi des opérations de raffinage différentes mais sont tous caractérisés par une variation de température bille et anneau supérieure ou égale à 6°C après test RTFOT.

Le premier type de bitume est un bitume issu de résidus de distillation directe (exemple 1, RDD). Le deuxième type de bitume est un bitume issu de résidus de distillation directe soufflés (exemple 2, RS). Dans l'exemple 3, des bitumes d'origine ou de grade différents (notés A, B, C ou D dans le tableau 4), issus de résidus de distillation sous vide viscoréduits sont utilisés (RSV-VR).

Les paraffines sont des paraffines de polyméthylène Fischer-Tropsch commercialisées par Sasol, en particulier sous la marque Sasobit®.

Les préparations bitume/paraffines sont réalisées à 170°C, dans un réacteur sous agitation. On introduit dans un premier temps le bitume dans le réacteur. Ensuite, on ajoute la paraffine. Les mélanges sont agités pendant environ 45 minutes. Leur aspect final est homogène.

Les compositions sont ensuite soumises au test RTFOT. On place les films de liant maintenus en mouvement dans une étuve à 160°C pendant 75 minutes. Ce test permet de simuler en laboratoire le vieillissement des bitumes routiers lors de l'enrobage avec des granulats en centrale à environ 160°C.

Le bitume 3D seul ou additivé à 2% de paraffines, est quant à lui soumis au test RTFOT suivi du test PAV ou Pressure Ageing Vessel (NF EN 14769). Ce test simule, le vieillissement long terme des bitumes. Après ce test, le bitume se trouve dans un état proche de celui dans lequel il se trouverait après quelques années d'usage. Ce test simule les changements subis par le liant au sein de la chaussée, au cours de son utilisation.

Dans ce test, un film de liant est chauffé à une température spécifiée, sous une pression d'air définie, pendant une durée donnée. Les températures d'essais sont typiquement de 85°C, 90°C, 100°C et 110°C. La pression de l'air à l'intérieur de l'étuve est de 2,1 MPa. La durée de l'essai est de 20 heures pour une température supérieure ou égale à 90°C ; la durée est de 65 heures pour une température de 85°C.

***Exemple 1 (en dehors de l'invention): Composition bitume/paraffine avec un bitume issu de résidus de distillation directe (RDD)***

Tableau 2

| Paraffine (% en masse) | Avant vieillissement RTFOT | | | | Après vieillissement RTFOT | | | |
|---|---|---|---|---|---|---|---|---|
| | P25 | TBA | IP | Point de Fraass | P25 | % P25 restante | TBA | ΔTBA |
| 0 | 49 | 53,6 | -0,39 | -18 | 31 | 63 | 61,2 | **7,6** |
| 2 | 36 | 70,6 | 2,11 | - | 24 | 67 | 75,2 | **4,6** |
| 3 | 32 | 77 | 2,79 | -13 | 23 | 72 | 80,4 | **3,4** |

D'après cet exemple en ajoutant 2% de paraffines à un bitume sensible au vieillissement ayant une ΔTBA$_B$ égale à 7,6 après test RTFOT, on obtient une composition bitumineuse ayant une ΔTBA$_A$ égale à 3,4 après test RTFOT, c'est-à-dire une composition bitumineuse qui n'est plus sensible au vieillissement.

***Exemple 2: Composition bitume/paraffine avec un bitume issu de résidus de distillation directe soufflés (RS)***

Tableau 3

| Paraffine (% en masse) | Avant vieillissement RTFOT | | | | Après vieillissement RTFOT | | | |
|---|---|---|---|---|---|---|---|---|
| | P25 | TBA | IP | Point de Fraass | P25 | % P25 restante | TBA | ΔTBA |
| 0 | 42 | 58,0 | 0,20 | -17 | 29 | 69 | 66,4 | **8,4** |

(suite)

|  | Avant vieillissement RTFOT | | | | Après vieillissement RTFOT | | | |
|---|---|---|---|---|---|---|---|---|
| Paraffine (% en masse) | P25 | TBA | IP | Point de Fraass | P25 | % P25 restante | TBA | $\Delta$**TBA** |
| 0,5 | 36 | 63,2 | 0,85 | -16 | 27 | 75 | 70,6 | **7,4** |
| 1,5 | 32 | 70,0 | 1,74 | -15 | 25 | 78 | 77,0 | **7,0** |
| 3 | 30 | 79,2 | 2,95 | -15 | 24 | 80 | 85,2 | **6,0** |

D'après cet exemple en ajoutant 3% de paraffines à un bitume sensible au vieillissement ayant une $\Delta TBA_B$ égale à 8,4 après test RTFOT, on obtient une composition bitumineuse ayant une $\Delta TBA_A$ égale à 6,0 après test RTFOT, c'est-à-dire une composition bitumineuse qui est moins sensible au vieillissement que le bitume de départ seul.

***Exemple 3: Composition bitume/paraffine avec un bitume issu de résidus de distillation sous vide viscoréduits (RSV-VR)***

Tableau 4

| Bitume | Paraffine (% en masse) | Avant vieillissement RTFOT | | | | Après vieillissement RTFOT | | | |
|---|---|---|---|---|---|---|---|---|---|
|  |  | P25 | TBA | IP | Point de Fraass | P25 | % P25 restante | TBA | $\Delta$**TBA** |
| **3A** | 0 | 63 | 48,4 | -1,07 | -13 | 34 | 54 | 57,4 | **9** |
|  | 1 | 54 | 55,2 | 0,20 | -12 | 30 | 55 | 62,8 | **7,6** |
|  | 1,5 | 46 | 61,8 | 1,17 | -11 | 29 | 63 | 68,2 | **6,4** |
| **3B** | 0 | 66 | 49,2 | -0,74 | -12 | 36 | 54 | 57,8 | **8,6** |
|  | 1,5 | 47 | 63 | 1,45 | -13 | 29 | 62 | 68,6 | **5,6** |
| **3C** | 0 | 59 | 48,6 | -1,18 | -15 | 32 | 54 | 58,8 | **10,2** |
|  | 1,4 | 53 | 58,2 | 0,80 | - | 30 | 56 | 66,6 | **8,4** |
|  | 1,5 | 48 | 60,2 | 0,96 | - | 28 | 58 | 67,6 | **7,4** |
|  | 1,6 | 45 | 61,6 | 1,07 | - | 27 | 60 | 68,6 | **7,0** |
| **3D** | 0 | 56 | 50,8 | -0,74 | -16 | 29 | 52 | 63,2 | **12,4** |
|  | 0,5 (en dehors de l'invention) | 47 | 52,0 | -0,85 | -10 | 27 | 57 | 64,8 | **12,8** |
|  | 1 | 45 | 56,4 | 0,03 | -12 | 26 | 58 | 68 | **11,6** |
|  | 2 | 41 | 63,6 | 1,22 | -12 | 25 | 60 | 73,6 | **10** |
|  | 3 | 38 | 71,0 | 2,30 | -12 | 23 | 61 | 79,8 | **8,8** |
|  | 4 | 35 | 80,2 | 3,44 | -12 | 22 | 62 | 86 | **5,8** |

D'après cet exemple en ajoutant 4% de paraffines à un bitume sensible au vieillissement ayant une $\Delta TBA_B$ égale à 12,4 après test RTFOT, on obtient une composition bitumineuse ayant une $\Delta TBA_A$ égale à 5,8 après test RTFOT, c'est-à-dire une composition bitumineuse qui n'est plus sensible au vieillissement.

Tableau 5

|  | Avant vieillissement RTFOT | | | | Après vieillissement RTFOT+PAV | | | |
|---|---|---|---|---|---|---|---|---|
| Paraffine (% en masse) | P25 | TBA | IP | Point de Fraass | P25 | % P25 restante | TBA | $\Delta$ **TBA** |
| 0 | 56 | 50,8 | -0,74 | -16 | 17 | 30 | 77,8 | **27,0** |
| 2 | 41 | 63,6 | 1,22 | -12 | 16 | 39 | 88,4 | **24,8** |

D'après cet exemple en ajoutant 2% de paraffines à un bitume sensible au vieillissement ayant une $\Delta TBA_B$ égale à 27 après test RTFOT et PAV, on obtient une composition bitumineuse ayant une $\Delta TBA_A$ égale à 24,8 après test RTFOT et PAV, c'est-à-dire une composition bitumineuse qui est moins sensible au vieillissement que le bitume de départ seul.

Dans les tableaux précédents, P25 signifie la pénétrabilité à l'aiguille, à 25°C, exprimée en 1/10 mm. TBA est la température de ramollissement bille et anneau, en °C. IP est l'indice de pénétrabilité Pfeiffer. $\Delta TBA$ est la variation de la TBA après RTFOT, exprimée en °C.

***Commentaires sur les résultats***

Quel que soit le bitume utilisé dans les exemples (RDD, RS ou RSV-VR), lorsque celui-ci n'est pas additivé de paraffines, il subit une importante augmentation de sa température de ramollissement bille et anneau après RTFOT. Ainsi, les différents résidus sans paraffines subissent après RTFOT des variations de température bille et anneau de 7,6 à 12,4°C, respectivement pour le RDD et le RSV-VR **3D**. Cette augmentation de température bille et anneau traduit un vieillissement important de la base bitume sans paraffines.

Lorsque le bitume est additivé avec des paraffines, on constate une diminution continue de la variation de température de ramollissement bille et anneau. Par exemple, la composition **3D** préparée à partir d'un bitume issu d'un résidu de distillation sous vide viscoréduit, passe d'une variation de température Bille et Anneau $\Delta TBA_B = 12,4°C$ sans paraffine, à une variation $\Delta TBA_A = 5,8°C$ avec 4% de paraffines. La composition selon l'invention est donc moins sensible au vieillissement que le bitume de départ.

On constate également que dans tous les cas, l'additivation de paraffines dans le bitume conduit à une augmentation de la pénétrabilité restante par rapport au bitume pur, augmentation d'autant plus importante que la quantité de paraffines ajoutée est importante. Cela traduit également une diminution de la sensibilité au vieillissement.

On constate lors du test RTFOT+PAV que la résistance au vieillissement à long terme est améliorée. Ainsi pour un bitume non additivé avec des paraffines la variation de température de ramollissement bille et anneau est de 27°C. Si on prépare une composition avec ce même bitume et 2% en masse de paraffines, la variation de température de ramollissement bille et anneau n'est plus que de 24,8°C. Cette diminution de variation de température de ramollissement bille et anneau traduit une meilleure résistance au vieillissement chimique dans l'étape d'enrobage et à l'usage.

**Revendications**

1. Composition bitumineuse **A** comprenant au moins un bitume et au moins une paraffine, la composition étant **caractérisée en ce qu'**elle comprend au moins un bitume **B** sensible au vieillissement dont la variation $\Delta TBA_B$ de la température de ramollissement bille et anneau après RTFOT selon la norme NF EN 12607-1 est supérieure ou égale à 6°C, **en ce qu'**elle est plus résistante au vieillissement que le bitume **B**, **en ce que** le bitume **B** est choisi parmi les produits issus de la viscoréduction et/ou du soufflage de résidus distillation atmosphérique et/ou de résidus de distillation sous vide, ces produits et résidus pouvant être pris seuls ou en mélanges, et **en ce que** la teneur en paraffines additionnées varie de 1 à 5 % en masse par rapport à la masse de bitume dans la composition **A**.

2. Composition bitumineuse selon la revendication 1, **caractérisée en ce que** la variation $\Delta TBA_A$ de la température de ramollissement bille et anneau de la composition bitumineuse **A** après RTFOT selon la norme NF EN 12607-1, est inférieure à la variation $\Delta TBA_B$ de la température de ramollissement bille et anneau dudit bitume **B** après RTFOT selon la norme NF EN 12607-1.

3. Composition bitumineuse selon l'une quelconque des revendications précédentes, **caractérisée en ce qu'**elle comprend au moins une paraffine de longueur de chaîne variant de $C_{30}$ à $C_{120}$ choisie parmi les polyalkylènes, de préférence les polyméthylènes et les polyéthylènes d'origine pétrolière ou de l'industrie chimique, et parmi les paraffines synthétiques issues de la conversion de la biomasse et/ou du gaz naturel, ces paraffines pouvant être prises seules ou en mélange.

4. Composition bitumineuse selon l'une quelconque des revendications précédentes, **caractérisée en ce qu'**elle comprend un mélange de paraffines composé de 50 à 100% de paraffines normales et de 0 à 50% d'isoparaffines et/ou de paraffines ramifiées, préférentiellement de 85% à 95% de paraffines normales et de 5 à 15% d'isoparaffines et/ou de paraffines ramifiées.

5. Composition bitumineuse selon l'une quelconque des revendications précédentes **caractérisée en ce que** le mélange de paraffines est issu de la conversion de gaz de synthèse par le procédé Fischer-Tropsch.

**6.** Utilisation de paraffines comme additifs pour améliorer la résistance au vieillissement d'une composition bitumineuse **A,** dans laquelle la composition bitumineuse **A** comprend au moins un bitume **B** sensible au vieillissement qui présente une variation $\Delta TBA_B$ de température de ramollissement bille et anneau après RTFOT selon la norme NF EN 12607-1, supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges, et dans laquelle la composition bitumineuse **A** comprend de 1 à 5% en masse de paraffines additionnées par rapport à la masse de bitume dans la composition **A**.

**7.** Utilisation selon la revendication 6, dans laquelle les paraffines sont issues de la conversion de gaz de synthèse par le procédé Fischer-Tropsch.

**8.** Procédé pour améliorer la résistance au vieillissement d'une composition bitumineuse **A** comprenant au moins un bitume **B** sensible au vieillissement, ledit procédé étant **caractérisé en ce qu'**il comprend les étapes essentielles suivantes :

i) mettre en œuvre au moins un bitume **B** sensible au vieillissement, dont la variation de température de ramollissement bille et anneau après RTFOT ($\Delta TBA_B$) est supérieure ou égale à 6°C, ledit bitume **B** étant choisi parmi les produits issus de la viscoréduction et/ou du soufflage de résidus distillation atmosphérique et/ou de résidus de distillation sous vide, ces produits et résidus pouvant être pris seuls ou en mélanges ;
ii) ajouter au bitume **B** de 1 à 5 % en masse de paraffines par rapport par rapport à la masse de bitume dans la composition **A** ;
iii) agiter la composition bitumineuse, en la chauffant entre 140 et 180°C, jusqu'à l'obtention d'une composition bitumineuse **A** homogène.

**9.** Utilisation d'une composition bitumineuse **A** selon la revendication 1 ou obtenue selon le procédé de la revendication 8, pour préparer un revêtement d'étanchéité, une membrane ou une couche d'imprégnation.

**10.** Utilisation d'une composition bitumineuse **A** selon la revendication 1 ou obtenue selon le procédé de la revendication 8, pour préparer un liant bitumineux, notamment un liant anhydre, une émulsion bitumineuse, un bitume fluxé ou un bitume polymère.

**11.** Utilisation d'une composition bitumineuse **A** selon la revendication 1 ou obtenue selon le procédé de la revendication 8, pour préparer une association entre un liant bitumineux comprenant ladite composition bitumineuse, et des granulats routiers, notamment enduit superficiel, enrobé à chaud, enrobé à froid, enrobé coulé à froid, grave émulsion, couche de roulement.

**12.** Association entre un liant bitumineux comprenant une composition bitumineuse A selon la revendication 1 ou obtenue selon le procédé de la revendication 8, et des granulats routiers, notamment enduit superficiel, enrobé à chaud, enrobé à froid, enrobé coulé à froid, grave émulsion, couche de roulement.

**Patentansprüche**

**1.** Bitumenzusammensetzung A, umfassend mindestens ein Bitumen und mindestens ein Paraffin, wobei die Zusammensetzung **dadurch gekennzeichnet ist, dass** sie mindestens ein alterungsempfindliches Bitumen B, dessen Variation $\Delta TBA_B$ der Ring-Kugel-Erweichungstemperatur nach RTFOT nach der Norm NF EN 12607-1 größer oder gleich 6 °C ist, umfasst, dass sie alterungsbeständiger als das Bitumen B ist, dass das Bitumen B aus den Produkten aus dem Visbreaking und/oder Blasen von atmosphärischen Destillationsresten und/oder von Vakuumdestillationsresten ausgewählt ist, wobei diese Produkte und Reste alleine oder im Gemisch verwendet werden können, und dass der Gehalt an hinzugegebenen Paraffinen von 1 bis 5 Massen-% in Bezug auf die Bitumenmasse in der Zusammensetzung A variiert.

**2.** Bitumenzusammensetzung nach Anspruch 1, **dadurch gekennzeichnet, dass** die Variation $\Delta TBA_A$ der Ring-Kugel-Erweichungstemperatur der Bitumenzusammensetzung A nach RTFOT nach der Norm NF EN 12607-1 kleiner als die Variation $\Delta TBA_B$ der Ring-Kugel-Erweichungstemperatur des Bitumens B nach RTFOT nach der Norm NF EN 12607-1 ist.

**3.** Bitumenzusammensetzung nach einem der vorhergehenden Ansprüche, **dadurch gekennzeichnet, dass** sie mindestens ein Paraffin mit einer Kettenlänge im Bereich zwischen $C_{30}$ und $C_{120}$ umfasst, ausgewählt unter den Polyalkylenen, vorzugsweise den Polymethylenen und den Polyethylenen aus Erdöl oder aus der chemischen Industrie, und unter den synthetischen Paraffinen aus der Umwandlung der Biomasse und/oder des Erdgases, wobei diese Paraffine alleine oder im Gemisch verwendet werden können.

**4.** Bitumenzusammensetzung nach einem der vorhergehenden Ansprüche, **dadurch gekennzeichnet, dass** sie ein Paraffingemisch aus 50 bis 100 % normalen Paraffinen und 0 bis 50 % Isoparaffinen und/oder verzweigten Paraffinen, vorzugsweise aus 85 % bis 95 % normalen Paraffinen und 5 bis 15 % Isoparaffinen und/oder verzweigten Paraffinen, umfasst.

**5.** Bitumenzusammensetzung nach einem der vorhergehenden Ansprüche, **dadurch gekennzeichnet, dass** das Paraffingemisch aus der Umwandlung von Synthesegasen durch das Fischer-Tropsch-Verfahren stammt.

**6.** Verwendung von Paraffinen als Zusatzstoffe, um die Alterungsbeständigkeit einer Bitumenzusammensetzung A zu verbessern, wobei die Bitumenzusammensetzung A mindestens ein alterungsempfindliches Bitumen B, dessen Variation $\Delta TBA_B$ der Ring-Kugel-Erweichungstemperatur nach RTFOT nach der Norm NF EN 12607-1 größer oder gleich 6 °C ist, umfasst, wobei das Bitumen B aus den Produkten aus dem Visbreaking und/oder Blasen von atmosphärischen Destillationsresten und/oder von Vakuumdestillationsresten ausgewählt ist, wobei diese Produkte und Reste alleine oder im Gemisch verwendet werden können, und dass der Gehalt an hinzugegebenen Paraffinen von 1 bis 5 Massen-% in Bezug auf die Bitumenmasse in der Zusammensetzung A variiert.

**7.** Verwendung nach Anspruch 6, bei der die Paraffine aus der Umwandlung von Synthesegas durch das Fischer-Tropsch-Verfahren stammen.

**8.** Verfahren zur Verbesserung der Alterungsbeständigkeit einer Bitumenzusammensetzung A, umfassend mindestens ein alterungsempfindliches Bitumen B, wobei das Verfahren **dadurch gekennzeichnet ist, dass** es die folgenden wesentlichen Schritte umfasst:

i) Einsetzen mindestens eines alterungsempfindlichen Bitumens B, dessen Variation der Ring-Kugel-Erweichungstemperatur nach RTFOT ($\Delta TBA_B$) größer oder gleich 6 °C ist, wobei das Bitumen B aus den Produkten aus dem Visbreaking und/oder Blasen von atmosphärischen Destillationsresten und/oder von Vakuumdestillationsresten ausgewählt ist, wobei diese Produkte und Reste alleine oder im Gemisch verwendet werden können;
ii) zu dem Bitumen B Hinzufügen von 1 bis 5 Massen-% Paraffine in Bezug zu der Bitumenmasse in der Zusammensetzung A;
iii) Schütteln der Bitumenzusammensetzung, wobei sie auf eine Temperatur zwischen 140 und 180 °C erhitzt wird, bis eine homogene Bitumenzusammensetzung A erhalten wird.

**9.** Verwendung einer Bitumenzusammensetzung A nach Anspruch 1 oder erhalten nach dem Verfahren aus Anspruch 8, um eine dichte Verkleidung, eine Membran oder eine Imprägnierschicht herzustellen.

**10.** Verwendung einer Bitumenzusammensetzung A nach Anspruch 1 oder erhalten nach dem Verfahren aus Anspruch 8, um ein bituminöses Bindemittel, insbesondere ein wasserfreies Bindemittel, eine Bitumenemulsion, ein fließfähiges Bitumen oder ein Bitumen-Polymer herzustellen.

**11.** Verwendung einer Bitumenzusammensetzung A nach Anspruch 1 oder erhalten nach dem Verfahren aus Anspruch 8, um eine Verbindung zwischen einem bituminösen Bindemittel, umfassend die Bitumenzusammensetzung, und Straßengranulat, insbesondere Straßenbelag, Heißmischgut, Kaltmischgut, kalt gegossenem Straßenbelag, mit Bitumenemulsion verfestigtes Mineralstoffgemisch, Rollschicht, herzustellen.

**12.** Verbindung zwischen einem bituminösen Bindemittel, umfassend eine Bitumenzusammensetzung A nach Anspruch 1 oder erhalten nach dem Verfahren aus Anspruch 8, und Straßengranulat, insbesondere Straßenbelag, Heißmischgut, Kaltmischgut, kalt gegossenem Straßenbelag, mit Bitumenemulsion verfestigtes Mineralstoffgemisch, Rollschicht.

**Claims**

**1.** Bituminous composition A comprising at least one bitumen and at least one paraffin, the composition being **char-**

**acterized in that** it comprises at least one bitumen B sensitive to aging the variation $\Delta TBA_B$ of the ring-and-ball softening point after RTFOT according to the standard NF EN 12607-1 of which is greater than or equal to 6°C, **in that** it is more age resistant than bitumen B, **in that** bitumen B is selected from the products originating from visbreaking and/or from the blowing of atmospheric distillation residues and/or vacuum distillation residues, these products and residues being able to be used alone or in mixtures, and **in that** the content of added paraffins varies from 1 to 5 % by weight with respect to the weight of bitumen in composition **A.**

2. Bituminous composition according to claim 1, **characterized in that** the variation $\Delta TBA_A$ of the ring-and-ball softening point of the bituminous composition **A** after RTFOT according to the standard NF EN 12607-1 is less than the variation $\Delta TBA_B$ of the ring-and-ball softening point of said bitumen **B** after RTFOT according to the standard NF EN 12607-1.

3. Bituminous composition according to any one of the preceding claims, **characterized in that** it comprises at least one paraffin with a chain length varying from $C_{30}$ to $C_{120}$ selected from the polyalkylenes, preferably the polymethylenes and the polyethylenes of oil or chemical industry origin, and from the synthetic paraffins originating from the conversion of biomass and/or natural gas, these paraffins being able to be used alone or in a mixture.

4. Bituminous composition according to any one of the preceding claims, **characterized in that** it comprises a mixture of paraffins comprising from 50 to 100% of normal paraffins and from 0 to 50% of isoparaffins and/or branched paraffins, preferentially from 85% to 95% of normal paraffins and from 5 to 15% of isoparaffins and/or branched paraffins.

5. Bituminous composition according to any one of the preceding claims, **characterized in that** the mixture of paraffins originates from the conversion of synthesis gas by the Fischer-Tropsch process.

6. Use of paraffins as additives for improving the age resistance of a bituminous composition A, in which the bituminous composition A comprises at least one bitumen B sensitive to aging which has a variation $\Delta TBA_B$ of ring-and-ball softening point after RTFOT according to the standard NF EN 12607-1, greater than or equal to 6°C, said bitumen **B** being selected from the products originating from visbreaking and/or from the blowing of atmospheric distillation residues and/or vacuum distillation residues, these products and residues being able to be used alone or in mixtures, and in which the bituminous composition **A** comprises from 1 to 5 % by weight of added paraffins with respect to the weight of bitumen in composition **A**.

7. Use according to claim 6, in which the paraffins originate from the conversion of synthesis gas by the Fischer-Tropsch process.

8. Process for improving the age resistance of a bituminous composition **A** comprising at least one bitumen **B** sensitive to aging, said process being **characterized in that** it comprises the following essential steps:

   i) utilizing at least one bitumen **B** sensitive to aging, of which the variation of ring-and-ball softening point after RTFOT ($\Delta TBA_B$) is greater than or equal to 6°C, said bitumen **B** being selected from the products originating from visbreaking and/or from the blowing of atmospheric distillation residues and/or vacuum distillation residues, these products and residues being able to be used alone or in mixtures;
   ii) adding to bitumen **B** from 1 to 5 % by weight of paraffins with respect to the weight of bitumen in composition **A**;
   iii) stirring the bituminous composition, while heating it between 140 and 180°C, until a homogeneous bituminous composition **A** is obtained.

9. Use of a bituminous composition **A** according to claim 1 or obtained according to the process of claim 8, for preparing a sealing membrane, a membrane or a priming coat.

10. Use of a bituminous composition **A** according to claim 1 or obtained according to the process of claim 8, for preparing a bituminous binder, in particular an anhydrous binder, a bituminous emulsion, a fluxed bitumen or a polymeric bitumen.

11. Use of a bituminous composition **A** according to claim 1 or obtained according to the process of claim 8, for preparing a combination of a bituminous binder comprising said bituminous composition and road aggregates, in particular surface dressing, hot mix, cold mix, cold-cast mix, emulsion gravel, wearing course.

**12.** Combination of a bituminous binder comprising a bituminous composition **A** according to claim 1 or obtained according to the process of claim 8, and road aggregates, in particular surface dressing, hot mix, cold mix, cold-cast mix, emulsion gravel, wearing course.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1227140 A2
- EP 17288831 A
- EP 1432778 A
- EP 1328607 A
- EP 0199475 A